# DEMANDE DE BREVET EUROPEEN

(11) **EP 1 088 578 A1**
(43) Date de publication de la demande: **04.04.2001**
(21) Numéro de dépôt: 00402314.9
(22) Date de dépôt: 18.08.2000
(51) Int. Cl.: B01D 3/32, F25J 5/00, F25J 3/00, F28D 9/00

(54) **Vaporiseur-condenseur à thermosiphon et installation de distillation d'air correspondante**

(30) Priorité: 21.09.1999 FR 9911778
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Darredeau, Bernard, 78500 Sartrouville (FR); Fuentes, François, 78110 le Vesinet (FR); Lehman, Jean-Yves, 94700 Maisons Alfort (FR); Wagner, Marc, 94100 Saint Maur des Fosses (FR)
(74) Mandataire: Mercey, Fiona Susan

(57) **Abrégé**

Dans ce vaporiseur-condenseur à thermosiphon, les passages de vaporisation (7, 8) ont une section variable et présentent sur leur longueur une section de passage qui augmente de bas en haut.

Application aux vaporiseurs-condenseurs principaux des doubles colonnes de distillation d'air.

## Description

La présente invention est relative à un vaporiseur-condenseur à thermosiphon, du type comprenant un empilement de plaques parallèles, de barres de fermeture et d'ondes-entretoises, qui définissent une première série de passages pour un fluide à vaporiser alimenté en source, et une seconde série de passages pour au moins un fluide de chauffage.

L'invention s'applique en particulier aux vaporiseurs-condenseurs principaux des appareils de distillation d'air, qui vaporisent l'oxygène liquide sous basse pression (typiquement légèrement supérieure à la pression atmosphérique) par condensation d'azote moyenne pression (typiquement de 5 à 6 bars absolus), et elle sera expliquée ci-dessous dans cette application.

L'invention a pour but d'obtenir un échange thermique important entre les deux fluides grâce à un taux de recirculation élevé du liquide, c'est-à-dire avec une résistance à l'écoulement du liquide relativement faible.

A cet effet, l'invention a pour objet un vaporiseur-condenseur du type précité, caractérisé en ce que les passages de la première série de passage ont une section variable et présentent sur leur longueur une section de passage qui augmente de bas en haut.

Le vaporiseur-condenseur suivant l'invention peut comporter une ou plusieurs des caractéristiques suivantes, prises isolément ou suivant toutes leurs combinaisons techniquement possibles :
- dans une première région de chaque passage à section variable où le fluide véhiculé est essentiellement liquide, ce fluide est guidé suivant un trajet globalement transversal par rapport à la longueur du passage, tandis que, dans une seconde région de ce passage où le fluide est diphasique, ce fluide est guidé suivant un trajet longitudinal par rapport à la longueur du passage, ce trajet longitudinal ayant une section de passage supérieure à celle du trajet globalement transversal ;
- dans ladite première région, le fluide est guidé suivant un trajet en zigzag ;
- le trajet en zigzag comprend au moins un tronçon dont la largeur est supérieure à celle d'un tronçon précédent du zigzag ;
- en regard de ladite première région, les passages de la deuxième série de passages définissent également un trajet globalement transversal pour le fluide de chauffage ;
- chaque passage à section variable contient une onde dont l'épaisseur de tôle diminue, et/ou dont le augmente, d'un tronçon à un tronçon plus dudit passage, à partir d'une région de celui-ci où le fluide véhiculé est essentiellement liquide ;
- chaque passage à section variable contient sur toute sa longueur une onde uniforme, l'espace délimité par chaque ondulation étant libre dans un tronçon d'extrémité inférieure du passage et partiellement obturé par des éléments de section croissante vers le tronçon d'extrémité supérieure du passage ;
- la phase vapeur du fluide de chauffage circule de bas en haut dans la seconde série de passages, et un nombre croissant de passages sont affectés au premier fluide de l'extrémité inférieure à l'extrémité supérieure du vaporiseur-condenseur ;
- la phase vapeur du fluide de chauffage circule de bas en haut dans la seconde série de passages, et une partie au moins des plaques ne s'étend que sur une partie de la longueur du vaporiseur-condenseur et sont progressivement décalées transversalement les unes par rapport aux autres de façon à délimiter des passages d'épaisseur progressivement croissante de bas en haut pour le fluide à vaporiser et des passages d'épaisseur progressivement décroissante de bas en haut pour le fluide de chauffage ;
- dans chaque région de transition correspondant à un changement de la section de passage affectée à chaque fluide, il est prévu deux barres de fermeture espacées l'une de l'autre, l'espace situé entre ces deux barres étant destiné à être mis à une pression inférieure à celle de chacun des deux fluides ;
- le vaporiseur-condenseur est constitué de plusieurs corps d'échangeurs superposés, la section de passage affectée à chaque fluide étant constante le long de chaque corps et variable d'un corps au suivant.

L'invention a également pour objet une installation de distillation d'air comprenant un appareil de distillation d'air muni d'un vaporiseur-condenseur pour vaporiser de l'oxygène liquide sous basse pression par condensation d'azote sous moyenne pression, ce vaporiseur-condenseur étant tel que défini ci-dessus.

Des exemples de réalisation de l'invention vont maintenant être décrits en regard des dessins annexés, sur lesquels :
- les Figures 1 et 2 représentent schématiquement, en perspective, un vaporiseur-condenseur suivant l'invention, avec une coupe longitudinale effectuée respectivement dans un passage d'oxygène et dans un passage d'azote ;
- la Figure 3 représente schématiquement un deuxième mode de réalisation du vaporiseur-condenseur suivant l'invention, en coupe longitudinale dans un passage d'oxygène ;
- les Figures 4 à 6 sont des vues prises respectivement en coupe suivant les lignes IV-IV à VI-VI de la Figure 3 ;
- les Figures 4A à 6A sont des vues analogues aux Figures 4 à 6, respectivement, mais relatives à une variante ;
- la Figure 7 est une vue prise suivant la flèche VII de la Figure 3 ;
- la Figure 7A est une vue analogue à la Figure 7 de la variante illustrée aux Figures 4A à 6A ;
- la Figure 8 est une vue partielle schématique, en coupe verticale transversale, d'un vaporiseur-condenseur suivant un troisième mode de réalisation de l'invention ;
- la Figure 9 est une vue partielle schématique, en coupe verticale transversale, d'un vaporiseur-condenseur suivant un quatrième mode de réalisation de l'invention ;
- la Figure 10 est une vue schématique, en coupe longitudinale dans un passage d'oxygène, d'un vaporiseur-condenseur suivant un cinquième mode de réalisation de l'invention ;
- la Figure 11 est une vue schématique du vaporiseur-condenseur de la Figure 10, prise en coupe longitudinale dans un passage d'azote ; et
- la Figure 12 est une vue schématique en perspective, avec arrachement, d'une zone de liaison entre deux corps d'échangeur du vaporiseur-condenseur de la Figure 11.

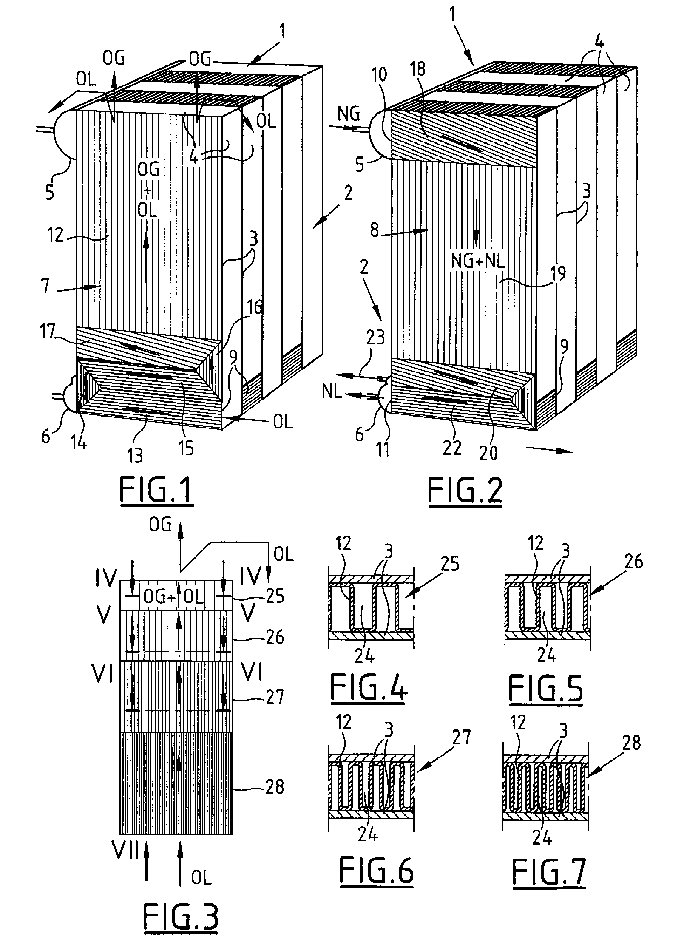

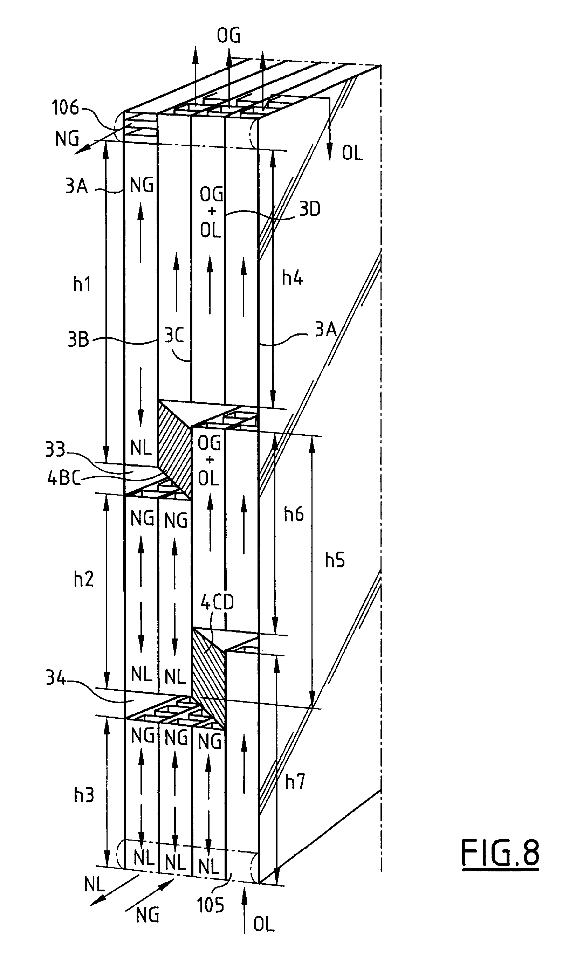

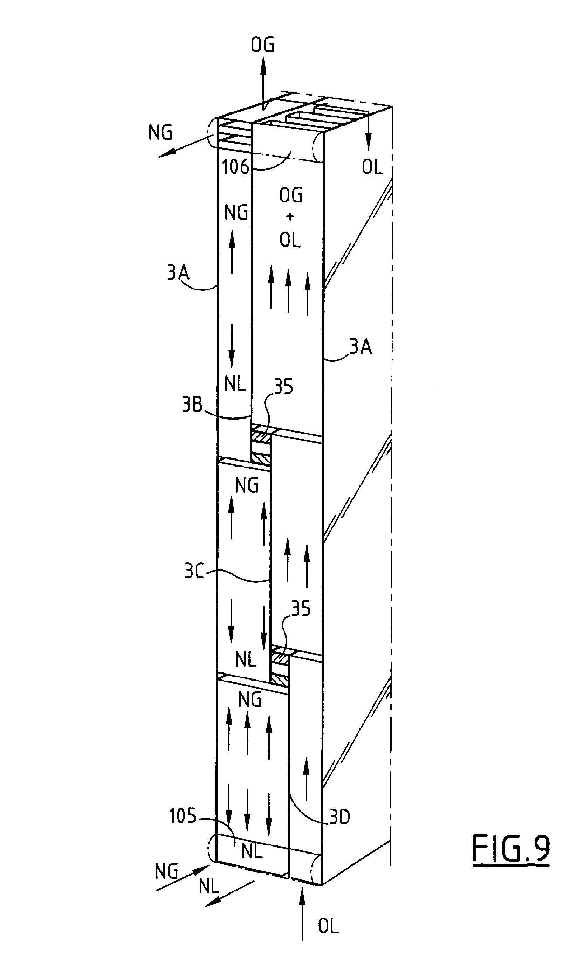

On a représenté aux Figures 1 et 2 un vaporiseur-condenseur 1 d'une double colonne de distillation d'air non représentée, destiné à vaporiser l'oxygène liquide de cuve de la colonne basse pression par condensation d'azote gazeux de tête de la colonne moyenne pression. Il s'agit d'un vaporiseur-condenseur du type « à bain » ou « à thermosiphon ».

Le vaporiseur-condenseur 1 comprend un corps d'échangeur unique 2 de forme générale parallélépipédique. Ce corps est constitué d'un empilement de plaques rectangulaires verticales 3, toutes identiques, de barres de fermeture périphériques 4 et d'ondes-entretoises, par exemple en tôle ondulée perforée, décrites plus loin. L'ensemble est brasé au four en une seule opération. Sur ce corps 2 sont soudées deux boîtes de forme générale semi-cylindrique, à savoir une boîte latérale supérieure 5 d'entrée d'azote gazeux et une boîte latérale inférieure 6 de sortie d'azote liquide.

Sur les Figures 1 à 3 et 8 à 11, les tranches des plaques ainsi que les barres de fermeture vues en coupe longitudinale sont simplement représentées par des traits gras, pour la clarté du dessin.

Chaque paire de plaques 3 adjacentes délimite un passage de forme générale plate. Ces passages sont alternativement des passages d'oxygène 7 (Figure 1) et des passages d'azote 8 (Figure 2). Les barres 4 ferment le pourtour de ces passages, à l'exception d'ouvertures d'entrée/sortie pour les fluides.

Ainsi, les passages 7 sont fermés latéralement sur toute leur hauteur, à l'exception d'une fenêtre latérale inférieure 9 opposée à la boîte 6. Ils sont totalement ouverts vers le haut et totalement fermés vers le bas. Au contraire, les passages 8 sont fermés sur toute leur périphérie à l'exception d'une fenêtre latérale supérieure 10 d'entrée d'azote gazeux, sur laquelle débouche la boîte 5, et d'une fenêtre latérale inférieure 11 de sortie d'azote liquide, sur laquelle débouche la boîte 6.

Sur la majeure partie de sa longueur à partir de sa sortie supérieure, chaque passage 7 contient une onde-entretoise 12 à génératrices verticales. Sur le reste de sa longueur, il contient une succession d'ondes qui forment, éventuellement avec deux barres séparatrices transversales partielles comme illustré, un trajet en zigzag à partir de la fenêtre 9 : une onde d'entrée 13 à génératrices horizontales, une première onde triangulaire de renvoi 14 à génératrices verticales, et une onde de retour 15 à génératrices horizontales. Cette dernière débouche sur une seconde onde triangulaire de renvoi 16 à génératrices verticales, qui débouche elle-même sur une onde oblique 17 qui redistribue le fluide sur toute la largeur de l'onde 12.

Chaque passage 8 (Figure 2) contient à son sommet une onde oblique 18 adaptée pour distribuer l'azote gazeux qui entre par la boîte 5 sur toute la largeur d'une onde principale 19 à génératrices verticales. Au-dessous ce celle-ci se trouve une onde collectrice oblique 20 qui rassemble l'azote essentiellement liquide sur une onde triangulaire 21 de renvoi à génératrices verticales. Cette dernière débouche à son tour sur une onde 22 d'évacuation d'azote liquide à génératrices horizontales, laquelle se termine sur la fenêtre 11. Là encore, comme illustré, une barre transversale partielle peut être prévue entre les ondes 20 et 22.

En fonctionnement, le vaporiseur-condenseur est à peu près totalement immergé dans l'oxygène liquide rassemblé en cuve de la colonne basse pression. L'oxygène liquide est introduit simultanément dans tous les passages 7 via les fenêtres 9, c'est-à-dire qu'il alimente ces passages en source. Du fait de la hauteur hydrostatique du bain, l'oxygène liquide est alors sous-refroidi. Il parcourt horizontalement l'onde 13 puis l'onde 15, suivant deux trajets de faible section d'écoulement formant un zigzag. Il commence à se vaporiser dans l'onde 15, de sorte que sa densité diminue. Il est alors distribué par l'onde 17 dans l'onde 12, qui offre au fluide diphasique ascendant une section d'écoulement nettement supérieure.

Ainsi, la section de passage augmente lorsque le volume massique du fluide augmente. Ceci conduit à un écoulement facilité, et donc à une meilleure recirculation de l'oxygène. Le coefficient d'échange thermique côté oxygène, qui dépend de la vitesse de circulation, est ainsi amélioré.

L'oxygène diphasique sort au sommet des passages 7. L'oxygène gazeux monte dans la colonne basse pression, tandis que l'oxygène liquide en excès retombe dans le bain d'oxygène liquide par débordement, comme indiqué par les flèches sur la Figure 1.

De même, l'azote gazeux distribué par l'onde 18 s'écoule tout d'abord le long de l'onde 19, avec une section d'écoulement importante. Puis, lorsqu'une fraction substantielle de l'azote est condensée, l'azote est rassemblé par l'onde 20 dans l'onde 22, qui lui offre une section d'écoulement nettement réduite. L'onde 22 confère au trajet de l'azote une configuration adaptée à celle du trajet de l'oxygène dans la zone, située en regard, de l'onde 13.

L'azote liquide retombe en reflux, via la boîte 6, dans la colonne moyenne pression. Les « incondensables » (hydrogène, hélium et néon) sont évacués de la double colonne via une conduite 23 piquée au sommet de la boîte 6.

Dans l'exemple représenté, il est prévu un aller-retour horizontal pour l'oxygène essentiellement liquide, suivant les ondes 13 et 15, lesquelles ont la même largeur verticale. En variante, le nombre de trajets horizontaux que parcourt initialement l'oxygène peut être inférieur au supérieur à deux, et, lorsqu'il est supérieur ou égal à deux, les sections d'écoulement de ces trajets peuvent être progressivement croissantes au fur et à mesure de la réduction de la densité du fluide. Des remarques analogues s'appliquent bien entendu aux passages 8.

Dans le mode de réalisation des Figures 3 à 7, les fenêtres latérales 9 sont supprimées et les passages 7 sont totalement ouverts vers le bas. Chaque passage d'oxygène 7 contient sur toute sa hauteur une onde 12 à génératrices verticales. Cependant, l'onde 12 a un pas variable, de plus en plus large de bas en haut, et/ou est constituée d'une tôle de plus en plus mince de bas en haut, ceci afin d'augmenter progressivement la section de passage de l'oxygène.

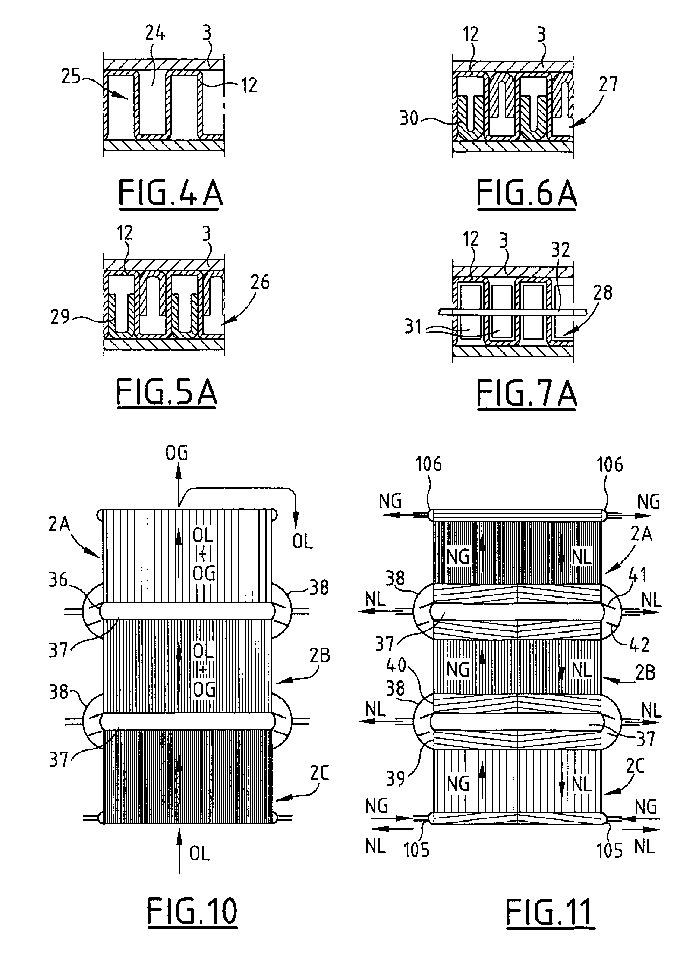

En variante ou en supplément, dans le même but (Figures 4A à 7A), les espaces 24 délimités par les ondulations sont libres dans le tronçon supérieur 25 du passage, alors que, dans les tronçons 26 à 28 situés au-dessous, ils sont progressivement de plus en plus obstrués par des inserts. Dans le deuxième tronçon à partir du haut, référencé 26, les inserts sont des tôles en U à paroi mince 29. Dans le troisième tronçon à partir du haut, référencé 27, ce sont des tôles en U à paroi épaisse 30. Dans le tronçon inférieur 28, ce sont des barres pleines 31 reliées à une tige-support 32 à la manière d'un peigne, chaque tige 32 s'appliquant sur la tranche d'extrémité inférieure de l'onde 12 correspondante, en laissant libre une fraction importante de la section d'entrée du passage 7 comme on le voit sur la Figure 7A.

Comme on le comprend, des dispositions analogues peuvent être prévues pour les passages d'azote 8.

Le vaporiseur-condenseur de la Figure 8 fonctionne avec une circulation ascendante de l'azote gazeux et descendante de l'azote liquide, c'est-à-dire en déphlegmateur. De plus, comme dans l'exemple précédent, les passages d'oxygène sont totalement ouverts vers le bas. L'azote gazeux pénètre dans les passages d'azote par une boîte d'entrée latérale inférieure 105, laquelle sert aussi à l'évacuation de l'azote liquide, et les incondensables sont évacués via une boîte de sortie supérieure 106.

Une plaque 3A sur quatre seulement est continue sur toute la hauteur du corps d'échangeur 2, tandis que les trois plaques intermédiaires sont divisées en trois tronçons. Ainsi, en considérant les plaques de gauche à droite sur la Figure 8 :
- la deuxième plaque 3B comporte, de haut en bas, un tronçon supérieur de hauteur h1, un tronçon intermédiaire de hauteur h2 et un tronçon inférieur de hauteur h3 ;
- la troisième plaque 3C comporte un tronçon supérieur de hauteur h4 inférieur à h1, un tronçon intermédiaire de hauteur h5 supérieur à h2, qui se termine vers le bas au même niveau que le tronçon intermédiaire de la plaque 3B, et un tronçon inférieur de hauteur h3 ; et
- la quatrième plaque 3D comporte un tronçon supérieur de hauteur h4, un tronçon intermédiaire de hauteur h6 inférieur à h5, dont l'extrémité supérieure est au même niveau que celle du tronçon intermédiaire de la plaque 3C, et un tronçon inférieur de hauteur h7 supérieur à h3.

Ainsi, le tronçon intermédiaire de la plaque milieu 3C chevauche à la fois l'extrémité inférieure du tronçon supérieur de la plaque 3B et l'extrémité supérieure du tronçon inférieur de la plaque 3D. Des barres de fermeture 4BC et 4CD relient de façon étanche les parties de ces trois plaques qui se trouvent en regard, et des interruptions telles que 33, 34 sont prévues entre les tronçons des plaques 3B à 3D, et dans les ondes correspondantes, qui sont toutes à génératrices verticales.

Ainsi, au cours de son mouvement ascendant, la section de passage de l'oxygène est multipliée par deux sur la hauteur des tronçons intermédiaires, puis augmentée de 50% sur la hauteur des tronçons supérieurs. Corrélativement, la section de passage de l'azote est réduite d'un tiers sur la hauteur des tronçons intermédiaires, puis divisée par deux sur celle des tronçons supérieurs.

Pour faciliter les changements de section de passage, comme représenté, les barres 4BC et 4 CD ont avantageusement des bords supérieur et inférieur obliques, qui leur confèrent une section en parallélogramme. De plus, on peut prévoir des entretoises très ajourées dans les espaces 33 et 34.

On retrouve les mêmes variations de section de passage dans le mode de réalisation de la Figure 9, qui diffère du précédent par la suppression des tronçons inférieur et intermédiaire de la plaque 3B, supérieur et inférieur de la plaque 3C, supérieur et intermédiaire de la plaque 3D. En outre, les ondes ont des hauteurs variables, correspondant aux écartements des tronçons de plaques dans les trois tronçons superposés de l'échangeur.

Pour éviter tout risque de contamination mutuelle des deux fluides, les barres 4BC et 4 CD de la Figure 8 sont remplacées par des paires de barres espacées, avec entre elles un espace libre 35 relié à un dispositif de mise en dépression (non représenté).

Le mode de réalisation des Figures 10 à 12 fonctionne sur le même principe que celui de la Figure 9, à savoir avec une section de passage progressivement croissante de bas en haut pour l'oxygène et une section de passage progressivement décroissante de bas en haut pour l'azote. Sur les Figures 10 et 11, la schématisation est analogue à celle de la Figure 3. La différence réside dans le fait que les trois tronçons d'échange de chaleur sont réalisés respectivement dans trois corps d'échangeurs différents 2A, 2B et 2C, avec des liaisons entre les passages respectifs de ces corps d'échangeurs.

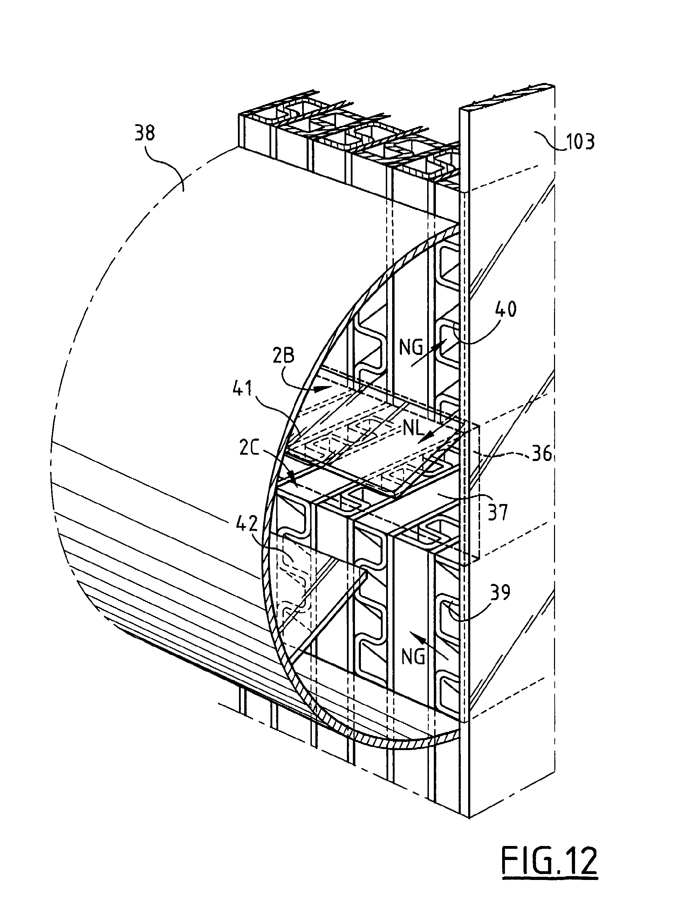

Ainsi, les plaques extrêmes 103 sont communes aux trois corps d'échangeurs, et des plaques verticales transversales 36 assurent une liaison étanche entre ces deux plaques, le bord supérieur du corps d'échangeur inférieur et le bord inférieur du corps supérieur (seuls les contours d'une telle plaque ont été représentés sur la Figure 12, pour plus de clarté). Ces plaques 36 peuvent être planes comme représenté sur la Figure 12, ou éventuellement bombées vers l'extérieur comme indiqué sur les Figures 10 et 11 pour mieux résister à la pression de l'azote.

De cette manière, il existe entre les corps superposés des espaces libres 37 qui, en service, sont entièrement emplis d'oxygène diphasique.

Pour permettre à l'azote de franchir chaque espace 37, il est prévu quatre boîtes latérales 38 qui chevauchent à la fois les fenêtres supérieures 39 de sortie d'azote gazeux du corps inférieur et les fenêtres inférieures 40 d'entrée d'azote gazeux et de sortie d'azote liquide du corps supérieur. Dans chaque boîte 38 sont prévus d'une part un déflecteur supérieur 41 qui descend à partir du bord inférieur du corps supérieur, et d'autre part un déflecteur inférieur 42 qui monte à partir de la paroi de la boîte 38 et est disposé en quinconce sous le déflecteur 41. Cet agencement en chicane permet d'assurer une évacuation partielle de l'azote liquide à deux niveaux intermédiaires du vaporiseur-condenseur, ainsi qu'une montée sans entrave de l'azote gazeux d'un corps à l'autre.

## Revendications

1. Vaporiseur-condenseur (1) à thermosiphon, du type comprenant un empilement de plaques parallèles (3), de barres de fermeture (4 ; 4BC ; 4CD) et d'ondes-entretoises (12 à 22), qui définissent une première série de passages (7) pour un fluide à vaporiser alimenté en source, et une seconde série de passages (8) pour au moins un fluide de chauffage, caractérisé en ce que les passages (7) de la première série de passages ont une section variable et présentent sur leur longueur une section de passage qui augmente de bas en haut.

2. Vaporiseur-condenseur suivant la revendication 1, caractérisé en ce que, dans une première région (13 à 15) de chaque passage à section variable (7) où le fluide véhiculé est essentiellement liquide, ce fluide est guidé suivant un trajet globalement transversal par rapport à la longueur du passage, tandis que, dans une seconde région de ce passage où le fluide est diphasique, ce fluide est guidé suivant un trajet (12) longitudinal par rapport à la longueur du passage, ce trajet longitudinal ayant une section de passage supérieure à celle du trajet globalement transversal.

3. Vaporiseur-condenseur suivant la revendication 2, caractérisé en ce que dans ladite première région, le fluide est guidé suivant un trajet en zigzag (13 à 15).

4. Vaporiseur-condenseur suivant la revendication 3, caractérisé en ce que le trajet en zigzag comprend au moins un tronçon dont la largeur est supérieure à celle d'un tronçon précédent du zigzag.

5. Vaporiseur-condenseur suivant l'une quelconque des revendications 2 à 4, caractérisé en ce que, en regard de ladite première région (13 à 15), les passages (8) de la deuxième série de passages définissent également un trajet globalement transversal (22) pour le fluide de chauffage.

6. Vaporiseur-condenseur suivant la revendication 1, caractérisé en ce que chaque passage à section variable (7, 8) contient une onde dont l'épaisseur de tôle diminue, et/ou dont le pas augmente, d'un tronçon (28, 27, 26) à un tronçon plus élevé (27, 26, 25) dudit passage, à partir d'une région (28) de celui-ci où le fluide véhiculé est essentiellement liquide.

7. Vaporiseur-condenseur suivant la revendication 1, caractérisé en ce que chaque passage à section variable contient sur toute sa longueur une onde (12) uniforme, l'espace délimité par chaque ondulation étant libre dans un tronçon d'extrémité inférieure (25) du passage et partiellement obturé par des éléments (29, 30, 31) de section croissante vers le tronçon d'extrémité supérieure (28) du passage.

8. Vaporiseur-condenseur suivant la revendication 1, à condensation du fluide de chauffage, caractérisé en ce que la phase vapeur du fluide de chauffage circule de bas en haut dans la seconde série de passages, et en ce qu'un nombre croissant de passages (3B, 3C, 3D) sont affectés au premier fluide de l'extrémité inférieure à l'extrémité supérieure du vaporiseur-condenseur.

9. Vaporiseur-condenseur suivant la revendication 1, à condensation du fluide de chauffage, caractérisé en ce que la phase vapeur du fluide de chauffage circule de bas en haut dans la seconde série de passages, et en ce qu'une partie au moins (3B, 3C, 3D) des plaques ne s'étend que sur une partie de la longueur du vaporiseur-condenseur et sont progressivement décalées transversalement les unes par rapport aux autres de façon à délimiter des passages d'épaisseur progressivement croissante de bas en haut pour le fluide à vaporiser et des passages d'épaisseur progressivement décroissante de bas en haut pour le fluide de chauffage.

10. Vaporiseur-condenseur suivant la revendication 8 ou 9, caractérisé en ce que, dans chaque région de transition correspondant à un changement de la section de passage affectée à chaque fluide, il est prévu deux barres de fermeture espacées l'une de l'autre, l'espace (35) situé entre ces deux barres étant destiné à être mis à une pression inférieure à celle de chacun des deux fluides.

11. Vaporiseur-condenseur suivant la revendication 8 ou 9, caractérisé en ce qu'il est constitué de plusieurs corps d'échangeurs superposés (2A, 2B, 2C), la section de passage affectée à chaque fluide étant constante le long de chaque corps et variable d'un corps au suivant.

12. Installation de distillation d'air, du type comprenant un appareil de distillation d'air muni d'un vaporiseur-condenseur pour vaporiser de l'oxygène liquide sous basse pression par condensation d'azote sous moyenne pression, caractérisée en ce que le vaporiseur-condenseur (1) est conforme à l'une quelconque des revendications 1 à 11.
